# FASCICULE DE BREVET EUROPEEN

(11) **EP 3 767 844 B1**
(45) Date de publication et mention de la délivrance du brevet: **29.04.2026**
(21) Numéro de dépôt: 20186253.9
(22) Date de dépôt: 16.07.2020
(51) Int. Cl.: H04B 17/10, H04B 17/12, H04W 52/12, H04W 52/10, G08B 13/08, G08B 25/10, G08B 13/14, H04Q 9/00, G08B 29/26

(54) **PROCÉDÉ DE CONFIGURATION D'UN DISPOSITIF DE DÉTECTION DE L'ÉTAT D'UN OUVRANT, ET DISPOSITF DE DÉTECTION ASSOCIÉ**
VERFAHREN ZUR KONFIGURATION DER DETEKTIONSVORRICHTUNG DES ZUSTANDS EINER ÖFFNUNG, UND ENTSCHPRECHENDE DETEKTIONSVORRICHTUNG
METHOD FOR CONFIGURING A DETECTION APPARATUS OF A STATE OF AN OPENING, AND CORRESPONDING DETECTION APPARATUS

(30) Priorité: 17.07.2019 FR 1908071
(43) Date de publication de la demande: 20.01.2021
(73) Titulaire: Somfy Activites SA, 74300 Cluses (FR)
(72) Inventeur: ROBIN, Serge, 74570 Thorens-Glieres (FR)
(74) Mandataire: Lavoix

(56) Documents cités:
- EP-A1- 3 383 058

## Description

La présente invention se rapporte à des procédés et à des dispositifs pour l'émission d'un message radio par un dispositif de détection de l'état d'un ouvrant, notamment dans un bâtiment.

Dans le domaine de la domotique, il existe des systèmes d'alarme, tels que des alarmes domestiques, pour surveiller l'état d'une fenêtre, ou d'un volet, ou d'une porte, ou plus généralement d'un ouvrant dans un bâtiment.

Dans ces systèmes, un dispositif de détection est associé à une partie mobile de l'ouvrant pour déterminer si la partie mobile se trouve dans une position parmi au moins une position ouverte ou une position fermée. L'information mesurée est transmise à une unité de contrôle programmée pour déclencher une alarme si l'ouvrant est identifié comme se trouvant dans une position anormale ou non conforme aux attendus.

Pendant longtemps, des moyens filaires ont été utilisés pour connecter les dispositifs de détection à l'unité de contrôle. Il est aujourd'hui souhaitable de pouvoir utiliser des dispositifs de détection capables de communiquer sans fil avec des équipements distants, par exemple au moyen d'une liaison radiofréquence.

Cependant, l'utilisation d'une liaison sans fil doit répondre à des exigences parfois contradictoires, notamment en ce qui concerne le réglage de la puissance d'émission des messages radio.

Sans liaison filaire, les dispositifs de détection ne peuvent plus être alimentés électriquement par une source d'énergie extérieure. Ils ont besoin d'une réserve d'énergie embarquée, telle qu'une batterie ou une pile, qui souvent n'est pas rechargeable par un utilisateur. La puissance d'émission doit donc être choisie pour que l'envoi de messages radio, qui est une opération consommatrice d'énergie, ne décharge pas prématurément cette réserve d'énergie.

Il est toutefois important que la liaison radio soit de bonne qualité et que les messages envoyés aient une chance d'atteindre leur destination. Cependant, les matériaux utilisés pour former l'ouvrant ont parfois des mauvaises propriétés de transmission et peuvent de fait entraver la propagation des messages radio émis, comme cela arrive parfois avec des cadres de fenêtre métalliques ou partiellement métalliques.

Un exemple de l'état antérieur de l'art est fourni dans le document EP 3 383 058.

Par ailleurs, de tels dispositifs sont souvent destinés à un usage domestique et doivent alors respecter des règlementations qui limitent la puissance électrique rayonnée lors de l'envoi des messages radiofréquence.

Il existe donc un besoin pour des procédés et des dispositifs pour l'émission d'un message radiofréquence qui répondent aux inconvénients précités, notamment pour optimiser la puissance d'émission des messages radiofréquence.

A cet effet, l'invention concerne un procédé selon la revendication 1.

L'identification de la position de la partie mobile permet de caractériser l'environnement immédiat de l'antenne radio. En effet, dans les deux cas de figure (position ouverte ou position fermée), l'antenne radio est en liaison avec la partie mobile. De plus, en position fermée, l'antenne est au moins partiellement entourée par ou accolée à la partie fixe, ce qui est susceptible de dégrader la qualité de la transmission.

La puissance d'émission est donc optimisée en recherchant un compromis entre, d'une part, le besoin d'avoir une transmission de bonne qualité et, d'autre part, la nécessité de ne pas trop consommer d'énergie ni d'émettre en permanence avec une puissance d'émission dépassant des limites règlementaires, tout en s'adaptant au mieux à l'installation.

Selon des aspects avantageux mais non obligatoires, un tel procédé peut incorporer une ou plusieurs des caractéristiques suivantes, prises isolément ou suivant toute combinaison techniquement admissible :
- L'étape d'acquisition de données représentatives d'une caractéristique du matériau formant l'ouvrant et/ou d'une caractéristique dimensionnelle de l'ouvrant comporte des étapes consistant à :
   - une fois que la partie mobile est dans une position fermée, envoyer un signal électrique vers l'antenne radio au moyen du circuit émetteur-récepteur pour émettre un signal radiofréquence prédéfini ;
   - mesurer la puissance électrique réfléchie par l'antenne vers le circuit émetteur-récepteur ;
      calculer une grandeur représentative de propriétés de réflexion de l'antenne à partir de la valeur mesurée ;
   - déterminer une valeur de seuil de puissance maximale d'émission pour la position fermée en fonction de la grandeur calculée.
   - la grandeur représentative est un rapport d'onde stationnaire calculé à partir d'un coefficient de réflexion de l'antenne.
- L'étape d'acquisition de données représentatives d'une caractéristique dimensionnelle de l'ouvrant et/ou d'une caractéristique du matériau formant l'ouvrant comporte des étapes consistant à :
   - récupérer automatiquement des données fournies par un utilisateur lors de l'installation, telles que le type de matériau utilisé et/ou l'épaisseur de matière qui entoure l'antenne lorsqu'elle est dans les positions ouverte et fermée et/ou la distance entre l'antenne et la partie mobile de l'ouvrant en position fermée.
- Le procédé comprend, pour au moins une position déterminée parmi une position ouverte de la partie mobile et une position fermée de la partie mobile, une étape de détermination d'une valeur seuil minimale et d'une valeur seuil maximale.
- Une valeur seuil déterminée en fonction des données acquises est une valeur de seuil de puissance minimale pour la position fermée de la partie mobile.
- La valeur de seuil de puissance maximale d'émission déterminée pour la position ouverte de la partie mobile est inférieure à la valeur de seuil de puissance maximale d'émission déterminée pour la position fermée de la partie mobile et la valeur de seuil de puissance minimale d'émission déterminée pour la position ouverte de la partie mobile est supérieure à la valeur de seuil de puissance minimale d'émission déterminée pour la position fermée de la partie mobile.

Selon un autre aspect, l'invention concerne un procédé de communication, mis en œuvre par un dispositif de détection de l'état d'un ouvrant, notamment dans un bâtiment, le dispositif de détection comprenant un ensemble de capteurs destinés à détecter la position d'une partie mobile de l'ouvrant, un processeur central, une mémoire informatique et un circuit émetteur-récepteur couplé à une antenne radio, le dispositif étant préalablement configuré par application d'un procédé de configuration tel que décrit précédemment. Conformément à l'invention, ce procédé de communication comporte des étapes consistant à :
- le dispositif de détection étant installé dans la partie mobile de l'ouvrant, identifier une position de la partie mobile par rapport à une partie fixe de l'ouvrant parmi au moins une position ouverte et une position fermée ;
- sélectionner automatiquement, par le dispositif de détection, une valeur de seuil de puissance d'émission associée à la position identifiée, déterminée au cours du procédé de configuration ;
- émettre un message radio, au moyen du circuit émetteur-récepteur et de l'antenne radio, avec une puissance d'émission radio sensiblement égale à la valeur de seuil de puissance d'émission sélectionnée pour la position identifiée par le dispositif de détection.

Un tel procédé de communication peut également incorporer une ou plusieurs des caractéristiques suivantes, prises isolément ou suivant toute combinaison techniquement admissible :
- Le dispositif détecte automatiquement un changement de position de la partie mobile par rapport à la partie fixe et identifie la nouvelle position de la partie mobile par rapport à la partie fixe avant l'émission d'un message radio.
- Au moins un capteur du dispositif de détection est couplé avec un mécanisme de fermeture de l'ouvrant et dans lequel l'identification de la position est réalisée par ledit au moins un capteur.

Selon un autre aspect, l'invention concerne un dispositif de détection selon la revendication 11.

Selon encore un autre aspect, l'invention concerne un ouvrant, tel qu'une fenêtre ou un volet ou une porte, comprenant une partie fixe et une partie mobile déplaçable par rapport à la partie fixe entre au moins une position ouverte et une position fermée, la partie mobile comportant un dispositif de détection tel que décrit précédemment.

L'invention sera mieux comprise et d'autres avantages de celle-ci apparaîtront plus clairement à la lumière de la description qui va suivre d'un mode de réalisation de méthodes et de dispositifs pour l'émission d'un message radiofréquence donnée uniquement à titre d'exemple et faite en référence aux dessins annexés, dans lesquels :
[Fig 1] la figure 1 est une représentation schématique d'un ouvrant, tel qu'une fenêtre, comportant un dispositif de détection selon des modes de réalisation de l'invention ;
[Fig 2] la figure 2 est un schéma bloc d'un dispositif de détection selon des modes de réalisation de l'invention ;
[Fig 3] la figure 3 est une représentation schématique d'un dispositif de détection selon un mode de réalisation de l'invention ;
[Fig 4] la figure 4 est un diagramme de flux représentant un exemple d'un procédé d'émission d'un message radio par le dispositif de détection de la figure 2 ;
[Fig 5] la figure 5 est un diagramme de flux représentant un exemple d'un procédé pour définir une valeur de seuil de puissance d'émission radio par le dispositif de détection de la figure 2 selon un premier mode de réalisation ;
[Fig 6] la figure 6 est un diagramme de flux représentant un exemple d'un procédé pour définir une valeur de seuil de puissance d'émission radio par le dispositif de détection de la figure 2 selon un deuxième mode de réalisation.

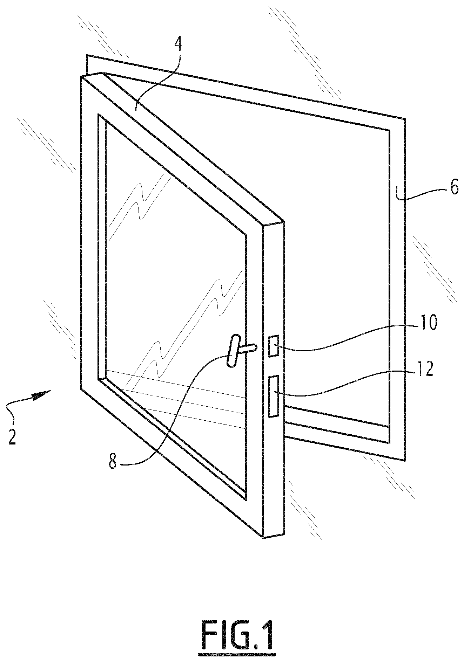

La figure 1 représente un ouvrant 2 configuré pour ouvrir ou fermer une ouverture formée dans un mur, dans une cloison, ou dans une paroi d'un bâtiment.

L'ouvrant 2 comporte une partie mobile 4 et une partie fixe 6.

Par exemple, la partie fixe 6 est solidarisée au mur.

La partie mobile 4 est déplaçable par rapport à la partie fixe 6, par exemple avec un mouvement de pivotement, de coulissement ou de basculement.

A cet effet, la partie mobile 4 peut être mécaniquement couplée à la partie fixe 6, par exemple au moyen d'une ou plusieurs charnières, ou d'un rail de guidage, ou d'un mécanisme oscillo-battant, ou de tout autre mécanisme approprié.

La partie mobile 4 est ainsi réversiblement déplaçable entre une position fermée et une position ouverte. Dans la position fermée, la partie mobile 4 est en contact avec la partie fixe 6 de manière à fermer, voire verrouiller l'ouverture.

Selon la nature du couplage mécanique, d'autres positions peuvent être envisagées, notamment des positions intermédiaires, telle qu'une position partiellement ouverte ou entrouverte.

Dans l'exemple illustré, l'ouvrant 2 est une fenêtre murale. L'encadrement de la fenêtre 2 forme la partie fixe 6. Le châssis de la fenêtre 2, ainsi que la ou les pans de vitre supportés par le châssis, forment ensemble la partie mobile 4 de la fenêtre.

Selon des variantes de construction, la fenêtre 2 peut comporter plusieurs parties mobiles, comme dans le cas d'une fenêtre qui comporte plusieurs battants.

On comprend que cet exemple d'une fenêtre est donné à titre illustratif et n'est pas nécessairement limitatif de l'invention. Dans de nombreux autres modes de réalisation, qui ne sont pas illustrés en détail, l'ouverture 2 peut être une porte, ou un volet, ou un portail, ou un rideau métallique, ou toute autre structure équivalente.

En pratique, la partie mobile 4 et la partie fixe 6 peuvent être réalisées en bois, ou en métal, ou dans un alliage métallique, ou en polymère, par exemple en PVC (Polychlorure de vinyle).

La partie mobile 4 de l'ouvrant 2 comporte un organe de commande 8, par exemple manuel tel qu'une poignée ou un levier, et un mécanisme de fermeture 10, également appelé ferrure, couplé à l'organe de commande 8. Alternativement ou en complément, l'organe de commande 8 peut être motorisé, c'est à dire qu'il comprend un moteur électrique permettant de déplacer la ferrure de manière motorisée.

Sur la figue 1, le mécanisme de fermeture 10 est schématisé de façon simplifiée et, en pratique, peut prendre une forme différente de celle illustrée. Par exemple, le mécanisme de fermeture 10 inclut une ou plusieurs tiges métalliques s'étendant le long du châssis de la partie mobile 4, par exemple le long d'un chant du châssis.

Selon des exemples, le mécanisme de fermeture 10 comporte au moins un pion de verrouillage déplaçable faisant saillie par rapport à la partie mobile 4. Le pion de verrouillage prend notamment plusieurs positions en fonction de l'actionnement de l'organe de commande 8. Il est par exemple configuré pour être engagé dans un logement de réception formé dans la partie fixe 6, afin de verrouiller la partie mobile 4 en position fermée sur la partie fixe 6.

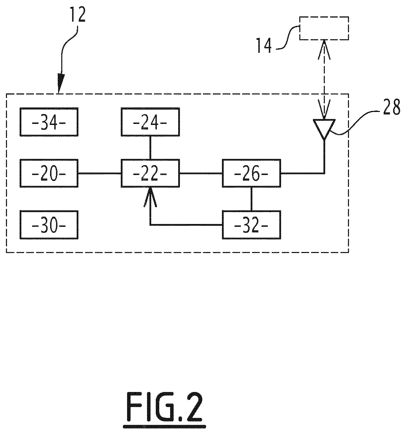

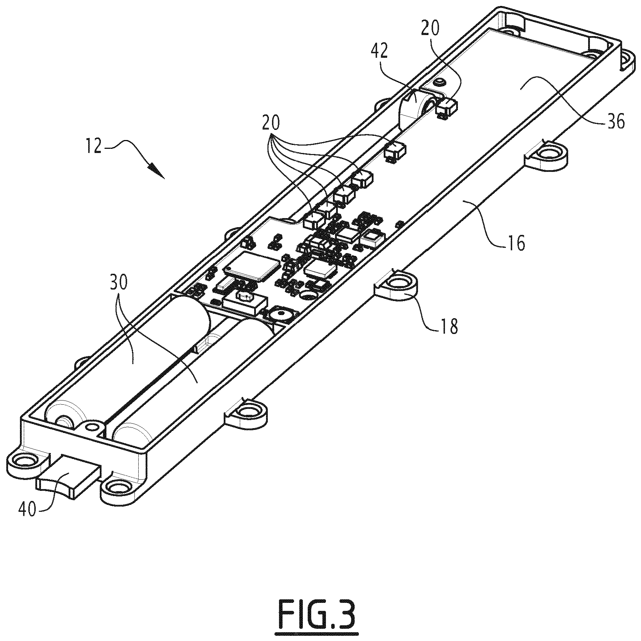

L'ouvrant 2 comporte également un dispositif de détection 12 configuré pour identifier la position de la partie mobile 4 par rapport à la partie fixe 6, et dont des exemples sont illustrés sur les figures 2 et 3.

Le dispositif de détection 12 est en outre configuré pour transmettre, vers une station de réception distante 14, un message radio contenant une information représentative de la position identifiée.

Par exemple, le dispositif de détection 12 fait partie d'un système domotique, tel qu'un système d'alarme domestique. La station de réception distante 14 peut être un récepteur radio connecté à un ordinateur central du système d'alarme.

Selon d'autres modes de réalisation, la station distante 14 peut en outre émettre des messages radio. Par exemple, la station distante 14 est une passerelle permettant un accès à un réseau informatique, telle qu'une passerelle pour un réseau domotique vers un réseau IP (Internet Protocol en anglais).

Le dispositif de détection 12 est associé à la partie mobile 4, par exemple installé ou embarqué dans la partie mobile 4 ou fixé sur la partie mobile 4. De préférence, le dispositif de détection 12 est installé de manière à ne pas entraver le mouvement de fermeture de la partie mobile 4. Il est par exemple logé dans une cavité de la partie mobile 4 ou dans une cavité formée par la partie mobile et la partie fixe.

Comme illustré sur la figure 3, le dispositif de détection 12 comporte un boîtier 16, par exemple réalisé en un matériau rigide, par exemple du plastique, tel que du polymère thermodurci.

Des équipements de fixation 18 sont associés au boîtier 16. Dans l'exemple illustré, les équipements de fixation 18 sont des trous de vis, coopérant avec des vis auto-perçantes vissées dans le châssis de la partie mobile.

Selon des modes de réalisation illustrés sur la figure 2, le dispositif de détection 12 comporte un ensemble de capteurs 20 pour mesurer la position de la partie mobile 4, un processeur 22, une mémoire informatique 24 et un circuit émetteur-récepteur 26 couplé à une antenne radio 28 configurée pour établir une liaison de communication radio avec la station de réception distante 14.

De préférence, les capteurs 20 sont logés à l'intérieur du boîtier 16, ce qui permet d'obtenir un dispositif de détection 12 relativement compact et facile à installer.

Selon des exemples, au moins un capteur 20 est couplé avec le mécanisme de fermeture 10, par exemple grâce à un système de mesure, comme cela sera décrit à titre d'exemple dans ce qui suit. Sur la figure 3, seul l'un des capteurs 20 est identifié par la référence « 20 ».

Par exemple, le processeur 22 est un microprocesseur ou un microcontrôleur programmé pour exécuter des instructions exécutables enregistrées sur un support lisible par ordinateur, tel que la mémoire 24, afin de mettre en œuvre un ou plusieurs des procédés décrits ci-après.

Selon des exemples, la mémoire 24 est une mémoire ROM, ou une mémoire RAM, ou une mémoire non volatile (par exemple selon l'une des technologies suivantes : EPROM, EEPROM, FLASH, NVRAM), ou équivalent.

Le processeur 22 et la mémoire 24 forment ensemble une unité électronique de commande du dispositif de détection 12.

En variante, le dispositif de détection 12 comporte un composant logique programmable (Field Programmable Gate Array), ou un circuit intégré spécialisé (Application Specific Integrated Circuit), ou un circuit électrique comportant un ensemble de composants électroniques discrets.

Le circuit émetteur-récepteur 26 et l'antenne radio 28 sont, par exemple, compatibles avec un ou plusieurs protocoles et standards de communication sans fil, tels qu'une liaison radio à courte portée, par exemple de type Bluetooth^{®} ou Zigbee^{®} ou équivalent, ou un réseau internet sans fil.

L'antenne radio 28 est embarquée dans la partie mobile 4. Par exemple, l'antenne 28 peut être disposée à l'intérieur du boîtier 16 ou à l'extérieur du boîtier 16 tout en restant dans la partie mobile 4 ou sur une face ou un bord extérieur de la partie mobile 4.

On comprend que, lorsque la partie mobile 4 est dans la position fermée, l'antenne 28 est confinée dans une cavité ou un interstice formé par les parties fixe et mobile, la cavité étant fermée par la partie fixe 6. En particulier, la partie fixe peut alors être accolée au boîtier du dispositif de détection, et donc accolée à l'antenne radio. Au contraire, dans la position ouverte ou même partiellement ouverte, l'antenne 28 n'est pas complètement confinée dans l'interstice ou cavité. La distance entre l'antenne et la partie fixe en position fermée est plus importante que distance entre l'antenne et la partie fixe en position ouverte. Ainsi, la qualité de la transmission est donc meilleure dans la position ouverte que dans la position fermée, surtout si la partie fixe 6 est réalisée en matière métallique. En effet, la présence d'une forte masse métallique à proximité de l'antenne radio peut fortement influer sur la qualité de l'émission de signaux radio.

Avantageusement, l'alimentation électrique du dispositif de détection 12 est fournie par une réserve d'énergie 30 embarquée dans le boîtier 16, telle qu'une batterie électrochimique ou une ou plusieurs piles.

Selon des modes de réalisation optionnels mais néanmoins avantageux, le dispositif de détection 12 comporte un circuit de mesure 32 connecté à l'antenne 28 et/ou au circuit émetteur-récepteur 26 afin de mesurer la puissance électrique réfléchie par l'antenne 28 lorsque celle-ci est alimentée par le circuit émetteur-récepteur 26 lors de l'envoi d'un message.

Dans certaines variantes, le circuit de mesure 32 est intégré dans et/ou implémenté par le circuit émetteur-récepteur 26.

Par exemple, le circuit de mesure 32 comporte un convertisseur analogique-numérique connecté à une entrée du processeur 22.

De façon optionnelle, le dispositif de détection 12 peut comporter un ou plusieurs capteurs additionnels 34, tels que des accéléromètres, configurés pour mesurer un déplacement ou une orientation de la partie mobile.

En pratique, les composants électroniques du dispositif de détection 12 peuvent être montés sur un circuit imprimé 36 installé à l'intérieur du boîtier 16.

Selon des modes de réalisation donnés à titre d'exemple, le couplage entre le ou les capteurs 20 et le mécanisme de fermeture 10 est réalisé grâce à une tige 40 du dispositif de détection 12 montée coulissante par rapport au boîtier 16.

Une extrémité externe de la tige 40 coopère avec le mécanisme de fermeture 10 afin d'être déplacée en translation lorsque le pion de verrouillage change de position, par exemple suite à une action d'un utilisateur sur l'organe de commande 8 et/ou suite à un déplacement de la partie mobile 4 de l'ouvrant 2. Une extrémité interne de la tige supporte un aimant permanent 42. Ainsi, l'aimant 42 se déplace avec la tige 40.

Dans cet exemple, les capteurs 20 sont des capteurs magnétiques, tels que des capteurs à effet Hall, qui sont montés sur le circuit imprimé 36 parallèlement à l'axe de déplacement de la tige 40. Lors du déplacement de la tige 40 avec le mécanisme de fermeture 10, l'aimant 42 prend ainsi plusieurs positions face aux capteurs 20.

La position de l'aimant 42 est donc mesurée grâce à l'action d'un ou de plusieurs capteurs 20 et du processeur 22. De cette manière, la position de la partie mobile 4 peut être déterminée indirectement.

Par exemple, la partie mobile 4 est considérée comme se trouvant dans la position fermée et verrouillée lorsque le pion de verrouillage est reçu à l'intérieur d'un logement de réception dans la partie fixe 6. La tige 40 occupe alors une certaine position qu'elle n'aurait pas autrement si le pion de verrouillage et la partie mobile 4 étaient dans une position autre que la position fermée.

Cet exemple donné à des fins d'illustration et d'explication n'est pas limitatif de l'invention et on comprend que d'autres modalités d'implémentation peuvent être utilisées pour mesurer la position de la partie mobile 4.

Par exemple, les capteurs 20 peuvent être des interrupteurs couplés directement ou indirectement avec le mécanisme de fermeture 10.

La position de la partie mobile 4 pourrait également, dans une autre variante, être mesurée indirectement par des capteurs 20 sans avoir recours à un couplage avec le mécanisme de fermeture 10.

Toujours en variante, lorsque le dispositif de détection 12 comporte un ou plusieurs capteurs additionnels 40, grâce auxquels par exemple la position de la partie mobile 4 peut être affinée, grâce aux mesures de déplacement et/ou d'orientation fournies par les capteurs additionnels 40.

Comme expliqué précédemment, le dispositif de détection 12 est programmé pour envoyer un ou plusieurs messages radio à destination du récepteur distant 14, par exemple sous la forme d'une ou plusieurs trames codées.

Par exemple, les messages peuvent contenir des informations représentatives de la position de la partie mobile 4.

Ainsi, lorsque le dispositif de détection 12 est utilisé au sein d'un système domotique, tel qu'un système d'alarme domestique, les messages servent à indiquer si l'ouvrant 2 est ouvert ou fermé. De cette façon, une action appropriée peut être automatiquement prise par le système domotique, par exemple pour déclencher une alarme si l'ouvrant 2 est ouvert alors qu'il n'aurait pas dû l'être.

Le processeur 22 est ainsi programmé pour générer au moins un message et pour piloter le circuit d'émission-réception 26 afin d'envoyer le message ainsi généré.

Selon un aspect de l'invention, le processeur 22 est programmé pour, avant l'envoi d'un message, définir des paramètres d'envoi du message, notamment définir la puissance d'émission radio avec laquelle le circuit d'émission-réception 26 enverra le message. Avantageusement, la puissance d'émission est choisie en fonction de la position - ouverte ou fermée - de l'ouvrant 2.

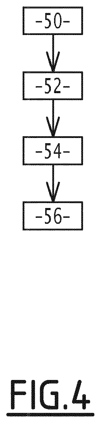

Un exemple de fonctionnement du dispositif de détection 12 est maintenant décrit en référence à la figure 4.

Le procédé démarre à l'étape 50.

Par exemple, le procédé démarre suite à un déplacement de la partie mobile 4 l'ouvrant 2. Selon des exemples, le déplacement est détecté par les capteurs 20 et/ou par au moins un capteur additionnel 40.

Par exemple, un tel déplacement est causé par une action d'un utilisateur sur la partie mobile 4, qu'il s'agisse d'une action légitime ou d'une tentative d'effraction.

Lors d'une étape 52, le dispositif de détection 12 identifie automatiquement la position occupée par la partie mobile 4, notamment pour identifier si la partie mobile 4 est dans la position fermée et verrouillée ou dans la position ouverte, voire dans une autre position. Par exemple, la position est identifiée grâce à un ou à plusieurs des capteurs 20. La position identifiée peut être ensuite stockée dans la mémoire 24.

Lors d'une étape 54, le dispositif de détection 12 sélectionne automatiquement, par exemple grâce au processeur 20, une valeur de seuil de puissance d'émission en fonction de la position identifiée.

Selon certains modes de réalisation, la valeur de seuil de puissance d'émission est sélectionnée parmi une pluralité de valeurs de seuil prédéfinies associées chacune à une position de la partie mobile.

Par exemple, une première valeur prédéfinie associée à la position ouverte et une deuxième valeur prédéfinie associée à la position fermée sont enregistrées en mémoire 24. La valeur de seuil de puissance d'émission est choisie égale à la première valeur si l'ouvrant 2 est identifié comme étant dans la position ouverte, et égal à la deuxième valeur si l'ouvrant 2 est identifié comme étant dans la position fermée.

En variante, il est possible de définir des valeurs prédéfinies additionnelles associées à d'autres positions de l'ouvrant. Ces valeurs prédéfinies additionnelles peuvent également être enregistrées en mémoire et l'une d'entre elle sélectionnée si l'ouvrant 2 est identifié comme étant dans la position correspondante.

Selon des modes de réalisation, une valeur de seuil de puissance minimale d'émission et une valeur de seuil de puissance maximale sont déterminées pour au moins une position parmi la position ouverte de la partie mobile et la position fermée de la partie mobile.

Selon des modes de réalisation, la première valeur de seuil de puissance maximale d'émission pour la position ouverte est inférieure à la deuxième valeur de seuil de puissance maximale d'émission pour la position fermée. De même, la première valeur de seuil de puissance minimale d'émission pour la position ouverte est supérieure à la deuxième valeur de seuil de puissance minimale d'émission pour la position fermée.

En pratique, une valeur de seuil déterminée en fonction des données acquises est une valeur de seuil de puissance minimale pour la position fermée de la partie mobile. D'autres valeurs seuils peuvent être ensuite déterminées relativement à cette valeur de seuil de puissance minimale, notamment par calcul.

Enfin, lors d'une étape 56, le message radio est émis par l'antenne radio 28 et par le circuit 26, avec une puissance d'émission radio sensiblement égale à la valeur de seuil de puissance d'émission sélectionnée pour la position identifiée par le dispositif de détection.

Par exemple, par « sensiblement égale », on entend ici que la puissance d'émission radio est égale à 5% près ou à 10% près à la valeur de seuil de puissance d'émission sélectionnée.

En pratique, lorsqu'une valeur de seuil de puissance minimale d'émission et une valeur de seuil de puissance maximale sont déterminées pour la position ouverte de la partie mobile et/ou la position fermée de la partie mobile, le message radio est émis par l'antenne radio 28 et par le circuit 26, avec une puissance d'émission radio inférieure à la valeur de seuil de puissance maximale d'émission et supérieure à la valeur de seuil de puissance minimale d'émission. La détermination de ces deux seuils au travers du procédé selon l'invention revient à limiter la plage de puissances d'émission utilisables par le dispositif de détection.

Grâce à de nombreux aspects de l'invention, l'identification de la position de la partie mobile permet de savoir quel est l'environnement immédiat de l'antenne radio 28. En effet, en position fermée de l'ouvrant 2, l'antenne est au moins partiellement entourée par la partie fixe 6 ou accolée à la partie fixe 6, ce qui est susceptible de dégrader la qualité de la transmission plus que dans la position ouverte, surtout si la partie fixe 6 est en matière métallique.

Comme la qualité de la transmission est meilleure dans la position ouverte que dans la position fermée de l'ouvrant 2, la valeur de seuil de puissance d'émission est plus faible lorsque l'ouvrant 2 est ouvert que lorsque l'ouvrant 2 est refermé.

La puissance d'émission, sensiblement égale à la valeur de seuil de puissance, est donc optimisée en fonction de la position de l'ouvrant 2 en recherchant un compromis entre, d'une part, le besoin d'avoir une transmission de bonne qualité et, d'autre part, la nécessité de ne pas trop consommer d'énergie ni d'émettre en permanence avec une puissance d'émission dépassant des limites règlementaires.

Selon des modes de réalisation, les valeurs prédéfinies sont des valeurs par défaut préenregistrées en mémoire en usine lors de la fabrication du dispositif de détection 12 ou lors de la fabrication de l'ouvrant 2. Ces valeurs prédéfinies sont des valeurs adaptées pour répondre aux exigences des normes dans ce domaine.

Selon d'autres variantes plus avantageuses, les valeurs prédéfinies peuvent être définies lors de l'installation de l'ouvrant ou du dispositif de détection 12, ce qui permet de tenir plus précisément compte de l'environnement immédiat de l'antenne 28 dans la partie mobile 4 et d'en tenir compte dans la définition des valeurs de seuil de puissance d'émission.

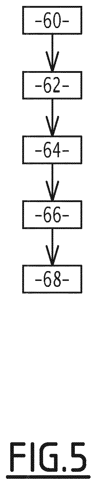

Selon une première possibilité, dont un exemple est décrit en référence à la figure 5, au moins une partie des valeurs prédéfinies est déterminée à partir de données fournies par un utilisateur lors de l'installation, notamment des caractéristiques relatives à des dimensions et/ou des propriétés des matériaux utilisés pour former l'ouvrant 2, et plus particulièrement utilisés pour former la partie fixe 4 et/ou la partie mobile 6. Cela permet de déterminer les valeurs de seuil de puissance d'émission sur la base des caractéristiques de l'environnement immédiat de l'antenne 28.

Par exemple, les données peuvent porter sur le type de matériau utilisé : bois, métal, polymère, etc. Les données peuvent aussi porter sur les dimensions de la partie mobile 4 ou de la partie fixe 6, telle que l'épaisseur de matière qui entoure l'antenne lorsqu'elle est dans les positions ouverte et fermée et/ou la distance entre l'antenne et la partie mobile de l'ouvrant en position fermée.

Le procédé démarre à l'étape 60, par exemple suite à une requête en calibration émise par un utilisateur.

La requête en calibration peut être émise en actionnant un bouton poussoir ménagé sur le dispositif de détection 12 ou en envoyant un message spécifique à destination du dispositif de détection 12 par l'intermédiaire de la liaison radio.

Lors d'une étape 62 et/ou d'une étape 64, le circuit de commande du dispositif de détection 12 reçoit des lesdites données fournies par l'utilisateur.

Par exemple, l'étape 62 correspond à la réception de données portant sur la nature du matériau et l'étape 64 correspond à la réception de données de dimension ou d'épaisseur.

Les données peuvent être transmises par l'utilisateur au moyen d'une liaison de communication établie avec le circuit électronique du dispositif de détection 12, telle qu'une liaison radio établie avec le circuit 26. Pour sélectionner et transmettre les données, l'utilisateur peut être muni d'un terminal électronique, ou peut utiliser un ordinateur connecté au dispositif de détection 12. Les données peuvent être sélectionnées par l'utilisateur parmi une liste prédéfinie de données, telle qu'une liste de matériaux ou une liste de dimensions.

Lors d'une étape 66, le circuit de commande détermine automatiquement une première valeur de seuil de puissance d'émission pour une position ouverte de la partie mobile 4 et une deuxième valeur de seuil de puissance d'émission pour une position fermée de la partie mobile 4 en fonction des données acquises.

De manière avantageuse, le circuit de commande détermine une première valeur de seuil de puissance maximale d'émission et une première valeur de seuil de puissance minimale pour une position ouverte de la partie mobile 4 et une deuxième valeur de seuil de puissance maximale et une deuxième valeur de seuil de puissance minimale d'émission pour une position fermée de la partie mobile 4, au moins un de ces valeurs étant déterminée en fonction des données acquises.

Par exemple, une table de correspondance prédéfinie est stockée en mémoire 24. Dans cette table, des valeurs de seuil de puissance d'émission sont préenregistrées et associées à différentes caractéristiques dimensionnelles et/ou caractéristiques de matériau.

Par exemple, pour chaque type de matériau, des valeurs seuil sont définies pour les positions ouverte et fermée. De même, différentes valeur seuil peuvent être définies pour différentes valeurs de dimensionnement. En pratique, pour chaque position, la valeur de seuil de puissance d'émission associée à un matériau métallique est supérieure aux valeurs de seuil de puissance d'émission associées à un matériau non métallique, tel que du bois ou un polymère.

Ainsi, lors de l'étape 66, les valeurs sont choisies en sélectionnant dans la table de correspondance les valeurs qui correspondent aux données sélectionnées par l'utilisateur.

Enfin, lors d'une étape 68, les valeurs de puissance déterminées sont enregistrées en mémoire 24.

A ce stade, le dispositif de détection 12 dispose d'une valeur seuil pour chaque position prédéfinie. Par la suite, lorsque les étapes 50 et suivantes du procédé d'identification de la position sont mises en œuvre, la valeur seuil sélectionnée lors de l'étape 54 est choisie parmi ces valeurs enregistrées en mémoire.

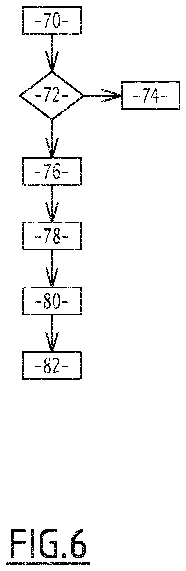

Selon une deuxième possibilité, dont un exemple est décrit en référence à la figure 6, au moins une partie des valeurs prédéfinies est déterminée automatiquement en mesurant des propriétés de réflexion d'un signal électrique envoyé vers l'antenne, de préférence lors de l'installation du dispositif de détection 12.

Par exemple, le procédé débute à l'étape 70, de préférence une fois que la partie mobile 4 est dans la position fermée.

De façon optionnelle, lors d'une étape 72, le dispositif de détection 12 identifie la position de la partie mobile 4 comme décrit précédemment pour vérifier que la partie mobile 4 est bien dans la position fermée. Si la partie mobile 4 n'est pas dans la position fermée, le procédé est interrompu (étape 74). Sinon, le procédé s'exécute normalement.

Lors d'une étape 76, un signal électrique est envoyé vers l'antenne radio 28 par le circuit émetteur-récepteur 26 pour émettre un signal radiofréquence prédéfini.

Par exemple, un signal radio continu, telle qu'une onde porteuse pure ou une porteuse modulée, est envoyé par l'antenne 28, par exemple pendant une durée d'au plus quelques secondes.

Lors d'une étape 78, la puissance électrique réfléchie par l'antenne 28 vers le circuit émetteur-récepteur 26 est mesurée, par exemple en utilisant le circuit de mesure 32 précédemment décrit.

Lors d'une étape 80, une grandeur représentative des propriétés de réflexion de l'antenne, est automatiquement calculée, par exemple par le processeur 22, à partir de la valeur mesurée de puissance électrique réfléchie par l'antenne 28.

Lors d'une étape 82, une valeur de seuil de puissance minimale d'émission pour la position fermée est automatiquement déterminée, par exemple par le processeur 22, en fonction des propriétés de réflexion calculées.

Par exemple, si aucune puissance réfléchie n'est mesurée ou si une faible puissance réfléchie, inférieure à 10% de la puissance électrique, de préférence inférieure à 5%, cela signifie que quasiment toute la puissance électrique fournie à l'antenne 28 est rayonnée. Il est alors très probable que l'antenne est entourée de zones non métalliques.

Au contraire, si une partie importante de la puissance électrique fournie à l'antenne 28 est réfléchie, par exemple au moins 20% ou 30%, cela signifie qu'il est probable que l'antenne 28 est au moins partiellement entourée de zones métalliques qui nuisent à la qualité de la transmission.

La valeur de seuil de puissance minimale d'émission est donc choisie en conséquence, en sélectionnant une valeur d'autant plus élevée que la puissance électrique réfléchie est importante, soit de manière linéaire, soit en utilisant des abaques ou des tables de correspondance. Ainsi, on s'assure que la transmission du signal radio sera effective en prenant en compte le cas défavorable de la position fermée et l'environnement du dispositif de détection.

Selon des modes de réalisation, ladite grandeur représentative des propriétés de réflexion de l'antenne est un rapport d'onde stationnaire (Voltage Standing Wave Ratio) calculé à partir du coefficient de réflexion de l'antenne 28, ce dernier étant déterminé à partir de la valeur mesurée de puissance électrique réfléchie.

Par exemple, lors de l'étape 82, la détermination de la valeur de seuil de puissance d'émission comporte des étapes consistant à comparer la valeur du rapport d'onde stationnaire calculé avec une valeur prédéfinie, puis à choisir la valeur de seuil de puissance d'émission parmi une pluralité de valeurs prédéfinies en fonction du résultat de la comparaison.

Cette deuxième méthode permet donc d'adapter plus finement la valeur de seuil de puissance d'émission, en particulier la valeur de seuil de puissance minimale d'émission, à l'environnement de l'antenne 28 en position fermée. En complément, une valeur relative de seuil de puissance d'émission, en particulier la valeur de seuil de puissance maximale d'émission, pour la position ouverte peut être déterminée.

Les modes de réalisation et les variantes envisagés ci-dessus peuvent être combinés entre eux pour donner naissance à de nouveaux modes de réalisation.

En particulier, lorsque le circuit émetteur-récepteur 26 du dispositif de détection 12 fonctionne en émission et en réception, il est possible d'affiner les valeurs de seuil de puissance d'émission, en particulier la valeur de seuil de puissance maximale d'émission, en fonction des conditions de réception du signal par la station distante 14. Ladite station distante 14 comprend alors un circuit électronique comprenant des moyens matériels et logiciels pour évaluer le niveau de puissance d'un signal radio reçu, tel que par exemple le niveau RSSI (Received Signal Strength Indication en anglais). Par retour d'information, la station distante 14peut ainsi signaler au dispositif de détection 12 d'augmenter ou de diminuer la valeur de seuil de puissance maximale d'émission du dispositif de détection 12, pour que la liaison sans fil ait une qualité suffisante.

## Revendications

1. Procédé de configuration d'un dispositif de détection (12) de l'état d'un ouvrant (2), notamment dans un bâtiment, l'ouvrant comportant une partie mobile associée audit dispositif de détection, le dispositif de détection comprenant :
un processeur (22),
une mémoire informatique (24),
un circuit émetteur-récepteur (26) couplé à une antenne radio (28) et configuré pour établir une liaison de communication radio avec une station de réception distante (14), et
un ensemble de capteurs (20) destinés à détecter la position de la partie mobile (4),
**caractérisé en ce que** le procédé comporte des étapes consistant à :
- acquérir (62, 64), par le dispositif de détection (12), des données influant la qualité de l'émission de signaux radio, lesdites données étant représentatives d'une caractéristique du matériau formant l'ouvrant (2) et/ou d'une caractéristique dimensionnelle de l'ouvrant (2) ;
- déterminer (66), par le dispositif de détection (12), un seuil de puissance d'émission radio de message(s) radio du circuit émetteur-récepteur (26) assurant une qualité suffisante de ladite liaison de communication, pour une position fermée de la partie mobile, en fonction des données acquises ;
- enregistrer (68) le seuil de puissance d'émission radio de message(s) radio associé aux données acquises dans la mémoire (24) du dispositif de détection.

2. Procédé selon la revendication précédente, dans lequel l'étape d'acquisition de données représentatives d'une caractéristique du matériau formant l'ouvrant (2) et/ou d'une caractéristique dimensionnelle de l'ouvrant (2) comporte des étapes consistant à :
- une fois que la partie mobile (4) est dans une position fermée, envoyer (76) un signal électrique vers l'antenne radio (28) au moyen du circuit émetteur-récepteur (26) pour émettre un signal radiofréquence prédéfini ;
- mesurer (78) la puissance électrique réfléchie par l'antenne vers le circuit émetteur-récepteur ;
- calculer (80) une grandeur représentative de propriétés de réflexion de l'antenne à partir de la valeur mesurée ;
- déterminer (82) une valeur de seuil de puissance maximale d'émission pour la position fermée en fonction de la grandeur calculée.

3. Procédé selon la revendication 2, dans lequel la grandeur représentative est un rapport d'onde stationnaire calculé à partir d'un coefficient de réflexion de l'antenne.

4. Procédé selon la revendication 1, dans lequel l'étape d'acquisition de données représentatives d'une caractéristique dimensionnelle de l'ouvrant (2) et/ou d'une caractéristique du matériau formant l'ouvrant (2) comporte des étapes consistant à :
- récupérer automatiquement des données fournies par un utilisateur lors de l'installation du dispositif de détection (12), telles que le type de matériau utilisé et/ou l'épaisseur de matière qui entoure l'antenne lorsque la partie mobile (4) de l'ouvrant (2) est dans les positions ouverte et fermée et/ou la distance entre l'antenne (28) et la partie mobile (4) de l'ouvrant (2) en position fermée.

5. Procédé de configuration selon l'une des revendications précédentes comprenant pour au moins une position déterminée parmi une position ouverte de la partie mobile et une position fermée de la partie mobile, une étape de détermination d'une valeur seuil minimale et d'une valeur seuil maximale de la puissance d'émission.

6. Procédé de configuration selon la revendication 5, dans lequel une valeur seuil déterminée en fonction des données acquises est une valeur de seuil de puissance minimale pour la position fermée de la partie mobile (2).

7. Procédé de configuration selon l'une des revendications 5 ou 6, dans lequel la valeur de seuil de puissance maximale d'émission déterminée pour la position ouverte de la partie mobile (4) est inférieure à la valeur de seuil de puissance maximale d'émission déterminée pour la position fermée de la partie mobile et en ce que la valeur de seuil de puissance minimale d'émission déterminée pour la position ouverte de la partie mobile (4) est supérieure à la valeur de seuil de puissance minimale d'émission déterminée pour la position fermée de la partie mobile.

8. Procédé de communication, mis en œuvre par un dispositif de détection (12) de l'état d'un ouvrant (2), notamment dans un bâtiment, le dispositif étant préalablement configuré par application d'un procédé de configuration conforme à l'une des revendications précédentes, ledit procédé de communication comportant des étapes consistant à :
- le dispositif de détection (12) étant installé dans la partie mobile (4) de l'ouvrant (2), identifier (52) une position de la partie mobile par rapport à une partie fixe (6) de l'ouvrant parmi au moins une position ouverte et une position fermée ;
- sélectionner (54) automatiquement, par le dispositif de détection (12), une valeur de seuil de puissance d'émission associée à la position identifiée, déterminée au cours du procédé de configuration ;
- émettre (56) un message radio, au moyen du circuit émetteur-récepteur (26) et de l'antenne radio (28), avec une puissance d'émission radio sensiblement égale à la valeur de seuil de puissance d'émission sélectionnée pour la position identifiée par le dispositif de détection.

9. Procédé de communication selon la revendication 8, dans lequel le dispositif détecte (50) automatiquement un changement de position de la partie mobile par rapport à la partie fixe et identifie (52) la nouvelle position de la partie mobile par rapport à la partie fixe avant l'émission d'un message radio.

10. Procédé de communication selon l'une quelconque des revendications 8 à 9, dans lequel au moins un capteur (20) du dispositif de détection est couplé avec un mécanisme de fermeture (10) de l'ouvrant et dans lequel l'identification de la position est réalisée par ledit au moins un capteur (20).

11. Dispositif de détection (12) pour un ouvrant (2), notamment dans un bâtiment, l'ouvrant comportant une partie mobile associée audit dispositif de détection, le dispositif de détection étant **caractérisé en ce qu'**il est conformé pour être associé à une partie mobile (4) de l'ouvrant et **en ce qu'**il comporte une antenne radio et une unité électronique de commande programmée pour mettre en œuvre un procédé de communication selon l'une des revendications 8 à 10.

12. Ouvrant (2), tel qu'une fenêtre ou un volet ou une porte, comprenant une partie fixe (6) et une partie mobile (4) déplaçable par rapport à la partie fixe entre au moins une position ouverte et une position fermée, la partie mobile comportant un dispositif de détection (12) conforme à la revendication 11.

## Patentansprüche

1. Konfigurationsverfahren einer Erfassungsvorrichtung (12) des Zustands eines Flügels (2), insbesondere in einem Gebäude, der Flügel umfassend einen bewegbaren Abschnitt, der mit der Erfassungsvorrichtung assoziiert ist, die Erfassungsvorrichtung umfassend:
einen Prozessor (22),
einen Computerspeicher (24),
eine Übertragungsempfangsschaltung (26), die mit einer Funkantenne (28) gekoppelt und konfiguriert ist, um eine Funkkommunikationsverbindung mit einer entfernten Empfangsstation (14) herzustellen, und
eine Anordnung von Sensoren (20), die dazu bestimmt sind, die Position des bewegbaren Abschnitts (4) zu erfassen,
**dadurch gekennzeichnet, dass** das Verfahren Schritte umfasst, die aus Folgendem bestehen:
- Aufnehmen (62, 64), durch die Erfassungsvorrichtung (12), von Daten, die die Qualität der Funksignalübertragung beeinflussen, wobei die Daten repräsentativ für eine Eigenschaft des Materials, das den Flügel (2) bildet, und/oder für eine maßliche Eigenschaft des Flügels (2) sind;
- Bestimmen (66), durch die Erfassungsvorrichtung (12), eines Funkübertragungsleistung-Schwellenwerts für Funknachricht(en) der Übertragungsempfangsschaltung (26), die eine ausreichende Qualität der Kommunikationsverbindung gewährleistet, für eine geschlossene Position des bewegbaren Abschnitts, abhängig von den aufgenommenen Daten;
- Speichern (68) des Funkübertragungsleistung-Schwellenwerts für Funknachricht(en), die mit den in dem Speicher (24) der Erfassungsvorrichtung aufgenommenen Daten assoziiert sind.

2. Verfahren nach dem vorherigen Anspruch, wobei der Schritt eines Erfassens von Daten, die repräsentativ für eine Eigenschaft des Materials, das den Flügel (2) bildet, und/oder für eine maßliche Eigenschaft des Flügels (2) sind, Schritte umfasst, die aus Folgendem bestehen:
- sobald der bewegbare Abschnitt (4) in einer geschlossenen Position ist, Senden (76) eines elektrischen Signals an die Funkantenne (28) mittels der Übertragungsempfangsschaltung (26), um ein vordefiniertes Funkfrequenzsignal zu übertragen;
- Messen (78) der von der Antenne zu der Übertragungsempfangsschaltung reflektierten elektrischen Leistung;
- Berechnen (80) einer repräsentativen Größe für Reflexionseigenschaften der Antenne anhand des Messwerts;
- Bestimmen (82) eines maximalen Übertragungsleistung-Schwellenwerts für die geschlossene Position abhängig von der berechneten Größe.

3. Verfahren nach Anspruch 2, wobei die repräsentative Größe ein Stehwellenverhältnis ist, das anhand eines Reflexionskoeffizienten der Antenne berechnet wird.

4. Verfahren nach Anspruch 1, wobei der Schritt eines Aufnehmens von Daten, die repräsentativ für eine maßliche Eigenschaft des Flügels (2) und/oder eine Eigenschaft des Materials, das den Flügel (2) bildet, sind, Schritte umfasst, die aus Folgendem bestehen:
- automatisches Abrufen von Daten, die von einem Benutzer bei der Installation der Erfassungsvorrichtung (12) bereitgestellt werden, wie beispielsweise die Art des verwendeten Materials und/oder die Stärke des Materials, das die Antenne umgibt, wenn der bewegbare Abschnitt (4) des Flügels (2) in der offenen und der geschlossenen Position ist, und/oder der Abstand zwischen der Antenne (28) und dem bewegbaren Abschnitt (4) des Flügels (2) in geschlossener Position.

5. Konfigurationsverfahren nach einem der vorherigen Ansprüche, umfassend für mindestens eine Position, bestimmt von einer offenen Position des bewegbaren Abschnitts und einer geschlossenen Position des bewegbaren Abschnitts, einen Schritt eines Bestimmens eines minimalen Schwellenwerts und eines maximalen Schwellenwerts der Übertragungsleistung.

6. Konfigurationsverfahren nach Anspruch 5, wobei ein Schwellenwert, der abhängig von den aufgenommenen Daten bestimmt wird, ein Schwellenwert für minimale Leistung für die geschlossene Position des bewegbaren Abschnitts (2) ist.

7. Konfigurationsverfahren nach einem der Ansprüche 5 oder 6, wobei der Schwellenwert für maximale Übertragungsleistung, der für die offene Position des bewegbaren Abschnitts (4) bestimmt wird, kleiner ist als der für die geschlossene Position des bewegbaren Abschnitts bestimmte Schwellenwert für maximale Übertragungsleistung, und dass der Schwellenwert für minimale Übertragungsleistung, der für die offene Position des bewegbaren Abschnitts (4) bestimmt wird, größer ist als der Schwellenwert für minimale Übertragungsleistung, der für die geschlossene Position des bewegbaren Abschnitts bestimmt wird.

8. Kommunikationsverfahren, das von einer Erfassungsvorrichtung (12) des Zustands eines Flügels (2), insbesondere in einem Gebäude, durchgeführt wird, wobei die Vorrichtung vorher durch Anwendung eines Konfigurationsverfahrens gemäß einem der vorherigen Ansprüche konfiguriert wird, das Kommunikationsverfahren umfassend Schritte, die aus Folgendem bestehen:
- wenn die Erfassungsvorrichtung (12) in dem bewegbaren Abschnitt (4) des Flügels (2) installiert ist, Identifizieren (52) einer Position des bewegbaren Abschnitts in Bezug auf einen feststehenden Abschnitt (6) des Flügels unter zumindest einer offenen und einer geschlossenen Position;
- automatisches Auswählen (54), durch die Erfassungsvorrichtung (12), eines Übertragungsleistung-Schwellenwerts, der mit der identifizierten Position assoziiert ist und während des Konfigurationsverfahrens bestimmt wird;
- Übertragen (56) einer Funknachricht mittels der Übertragungsempfangsschaltung (26) und der Funkantenne (28) mit einer Funkübertragungsleistung, die im Wesentlichen gleich dem Übertragungsleistung-Schwellenwert für die von der Erfassungsvorrichtung identifizierte Position ist.

9. Kommunikationsverfahren nach Anspruch 8, wobei die Vorrichtung (50) automatisch eine Änderung der Position des bewegbaren Abschnitts gegenüber dem feststehenden Abschnitt erfasst und die neue Position des bewegbaren Abschnitts gegenüber dem feststehenden Teil identifiziert (52), bevor eine Funknachricht übertragen wird.

10. Kommunikationsverfahren nach einem der Ansprüche 8 oder 9, wobei mindestens ein Sensor (20) der Erfassungsvorrichtung mit dem Schließmechanismus (10) des Flügels gekoppelt ist und wobei das Identifizieren der Position durch mindestens einen Sensor (20) erfolgt.

11. Erfassungsvorrichtung (12) für einen Flügel (2), insbesondere in einem Gebäude, der Flügel umfassend einen bewegbaren Abschnitt, der mit der Erfassungsvorrichtung assoziiert ist, wobei die Erfassungsvorrichtung **dadurch gekennzeichnet ist, dass** sie gestaltet ist, um mit einem bewegbaren Abschnitt (4) des Flügels assoziiert zu sein, und dass sie eine Funkantenne und eine elektronische Steuereinheit umfasst, die programmiert ist, um ein Kommunikationsverfahren nach einem der Ansprüche 8 bis 10 durchzuführen.

12. Flügel (2), wie beispielsweise ein Fenster, ein Rollladen oder eine Tür, umfassend einen feststehenden Abschnitt (6) und einen bewegbaren Abschnitt (4), der in Bezug auf den feststehenden Abschnitt zwischen mindestens einer offenen und einer geschlossenen Position verschiebbar ist, wobei der bewegbare Abschnitt eine Erfassungsvorrichtung (12) nach Anspruch 11 umfasst.

## Claims

1. Method for configuring a device (12) for detecting the state of an openable member (2), in particular in a building, the openable member comprising a movable part associated with said detection device, the detection device comprising:
a processor (22),
a computer memory (24),
a transceiver circuit (26) coupled to a radio antenna (28) and configured to establish a radio communication link with a remote reception station (14), and
a set of sensors (20) for detecting the position of the moving part (4),
**characterised in that** the method comprises the steps consisting of:
- acquiring (62, 64), by the detection device (12), data influencing the quality of radio signal transmission, said data being representative of a characteristic of the material forming the openable member (2) and/or of a dimensional characteristic of the openable member (2);
- determining (66), by the detection device (12), a radio transmission power threshold for radio message(s) of the transceiver circuit (26) ensuring sufficient quality of said communication link, for a closed position of the movable part, as a function of the acquired data;
- recording (68) the transmission power threshold of radio message(s) associated with the data acquired in the memory (24) of the detection device.

2. Method according to the preceding claim, in which the step of acquiring data representative of a characteristic of the material forming the openable member (2) and/or of a dimensional characteristic of the openable member (2) comprises steps consisting of:
- once the movable part (4) is in a closed position, sending (76) an electrical signal to the radio antenna (28) by means of the transceiver circuit (26) to emit a predefined radio frequency signal;
- measuring (78) the electrical power reflected by the antenna back to the transceiver circuit;
- calculating (80) a value representative of the antenna's reflection properties from the measured value;
- determining (82) a threshold value for the maximum transmission power for the closed position as a function of the calculated value.

3. Method according to claim 2, wherein the representative quantity is a standing wave ratio calculated from an antenna reflection coefficient.

4. Method according to claim 1, in which the step of acquiring data representative of a dimensional characteristic of the openable member (2) and/or of a characteristic of the material forming the openable member (2) comprises the following steps:
- automatically retrieving data provided by a user during installation of the detection device (12), such as the type of material used and/or the thickness of material surrounding the antenna when the movable part (4) of the openable member (2) is in the open and closed positions, and/or the distance between the antenna (28) and the movable part (4) of the openable member (2) in the closed position.

5. Configuration method according to one of the previous claims, including for at least one position determined from an open position of the movable part and a closed position of the movable part, a step of determining a minimum threshold value and a maximum threshold value of the transmission power.

6. Configuration method according to claim 5, in which a threshold value determined from the acquired data is a minimum power threshold for the closed position of the movable part (2).

7. Configuration method according to one of claims 5 or 6, in which the maximum transmission power threshold value determined for the open position of the movable part (4) is less than the maximum transmission power threshold value determined for the closed position of the movable part and in that the minimum transmission power threshold value determined for the open position of the movable part (4) is greater than the minimum transmission power threshold value determined for the closed position of the movable part.

8. Communication method implemented by a device (12) for detecting the state of an openable member (2), in particular in a building, the device having been previously configured by application of a configuration method according to one of the preceding claims, said communication method comprising steps consisting of:
- the detection device (12) being installed in the movable part (4) of the openable member (2), identifying (52) a position of the movable part relative to the fixed part (6) of the opening member from among at least one open position and one closed position;
- automatically selecting (54), by the detection device (12), a transmission-power threshold value associated with the identified position, determined during the configuration method;
- emitting (56) a radio message, by means of the transceiver circuit (26) and the antenna (28), with a radio transmission power substantially equal to the transmission power threshold value selected for the position identified by the detection device.

9. A communication method according to claim 8, in which the device automatically detects (50) a change in position of the mobile part relative to the fixed part and identifies (52) the new position of the mobile part relative to the fixed part before transmitting a radio message.

10. A communication method according to any one of claims 8 to 9, wherein at least one sensor (20) of the detection device is coupled to a closing mechanism (10) of the openable member, and wherein the position identification is performed by said at least one sensor (20).

11. Detection device (12) for an openable member (2), particularly in a building, the opening member comprising a movable part associated with the said detection device, the detection device being **characterised in that** it is shaped to be associated with a movable part (4) of the openable member and **in that** it comprises a radio antenna and an electronic control unit programmed to implement a communication method according to one of claims 8 to 10.

12. An openable member (2), such as a window, a shutter or a door, comprising a fixed part (6) and a movable part (4) movable relative to the fixed part between at least one open position and one closed position, the movable part comprising a detection device (12) according to claim 11.
